# EUROPEAN PATENT APPLICATION

(11) **EP 3 144 850 A1**
(43) Date of publication of application: **22.03.2017**
(21) Application number: 16186323.8
(22) Date of filing: 30.08.2016
(51) Int. Cl.: G06K 9/00

(54) **DETERMINATION APPARATUS, DETERMINATION METHOD, AND NON-TRANSITORY RECORDING MEDIUM**

(30) Priority: 18.09.2015 JP 2015184903
(71) Applicant: Panasonic Intellectual Property Management Co., Ltd., Osaka-shi, Osaka 540-6207 (JP)
(72) Inventor: ARATA, Koji, Osak-shi, Osaka 540-6207 (JP)
(74) Representative: Grünecker Patent- und Rechtsanwälte PartG mbB

(57) **Abstract**

A determination apparatus includes: an receiver receives a distance image including a first region located between a first position and a second position, a second region located between the first position and the second position and located closer to the second position than the first region, a third region set within a predetermined area from an operation unit of a piece of equipment installed in front of the first position and the second position; a detector that, on a basis of the distance image, detects a first physical object of a predetermined size or larger in at least either the first region or the second region and detects a second physical object of a predetermined size or larger in the third region; and a determiner, when, in a case where the first physical object and the second physical object have been detected, the first physical object is included in the first region, determines that an operator of the piece of equipment is present in the first position or, when, in a case where the first physical object and the second physical object have been detected, the first physical object is included in the second region, determines that an operator of the piece of equipment is present in the second position.

## Description

### BACKGROUND

### 1. Technical Field

The present disclosure relates to a determination apparatus, a determination method, and a non-transitory recording medium.

### 2. Description of the Related Art

There has recently been known a technology for determining a person who operates a predetermined piece of equipment.

For example, Japanese Unexamined Patent Application Publication No. 2004-67031 discloses an apparatus that extracts the center of gravity of a hand of an operator from a shot image and determines the operator according to whether the center of gravity is located in a left-side region or a right-side region with respect to a reference line set in the image.

However, the apparatus disclosed in Japanese Unexamined Patent Application Publication No. 2004-67031 has a risk of erroneous determination, as the regions that are used for the determination are two equal parts into which the shot image has been simply divided and the center of gravity is the only value that is used for the determination.

### SUMMARY

One non-limiting and exemplary embodiment provides a determination apparatus, a determination method, and a non-transitory recording medium that make it possible to more highly accurately determine an operator of a piece of equipment.

In one general aspect, the techniques disclosed here feature a determination apparatus including: an receiver that receives a distance image including a first region located between a first position and a second position, a second region located between the first position and the second position and located closer to the second position than the first region, a third region set within a predetermined area from an operation unit of a piece of equipment installed in front of the first position and the second position; a detector that, on a basis of the distance image, detects a first physical object of a predetermined size or larger in at least either the first region or the second region and detects a second physical object of a predetermined size or larger in the third region; and a determiner that, when, in a case where the first physical object and the second physical object have been detected, the first physical object is included in the first region, determines that an operator of the piece of equipment is present in the first position or, when, in a case where the first physical object and the second physical object have been detected, the first physical object is included in the second region, determines that an operator of the piece of equipment is present in the second position.

The present disclosure makes it possible to more highly accurately determine the operator of the piece of equipment.

It should be noted that general or specific embodiments may be implemented as a system, a method, an integrated circuit, a computer program, a storage medium, or any selective combination thereof.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

### BRIEF DESCRIPTION OF THE DRAWINGS

Fig. 1 is a block diagram showing an example of a configuration of a determination apparatus according to an embodiment of the present disclosure;
Fig. 2A is a top view showing examples of a first region, a second region, and a third region;
Fig. 2B is a perspective view showing the examples of the first region, the second region, and the third region;
Fig. 3A is a top view showing an example of a state where an occupant in a first seat is going to operate a piece of equipment;
Fig. 3B is a perspective view showing the example of the state shown in Fig. 3A;
Fig. 4A is a top view showing an example of a state where an occupant in a second seat is going to operate the piece of equipment;
Fig. 4B is a perspective view showing the example of the state shown in Fig. 4A;
Fig. 5 is a flow chart showing an example of the flow of an operation of the determination apparatus according to the embodiment of the present disclosure;
Fig. 6 is a top view showing modifications of the first region and the second region;
Fig. 7A is a perspective view showing modifications of first regions and second regions;
Fig. 7B is a perspective view showing modifications of a first region and a second region; and
Fig. 8 is a diagram showing an example of a hardware configuration of a computer that programmatically achieves a function of each component.

### DETAILED DESCRIPTION

An embodiment of the present disclosure is described in detail below with reference to the drawings. Note, however, that, in the embodiment, components having the same functions are given the same reference numerals and, as such, are not repeatedly described.

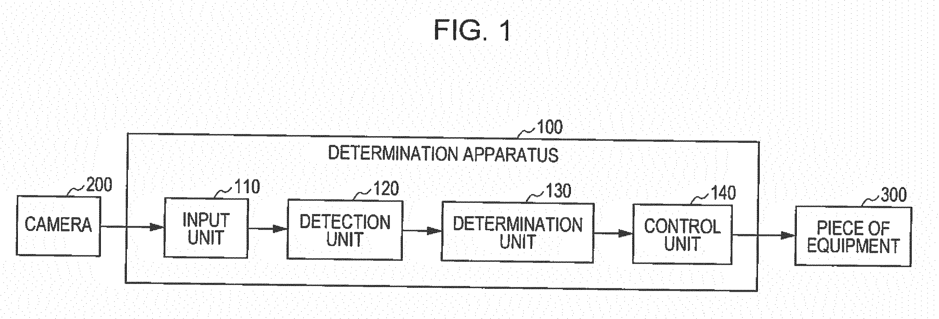

First, an example of a configuration of a determination apparatus 100 according to an embodiment of the present disclosure is described with reference to Fig. 1. Fig. 1 is a block diagram showing the example of the configuration of the determination apparatus 100 according to the embodiment of the present disclosure.

The determination apparatus 100, a camera 200, and a piece of equipment 300, which are shown in Fig. 1, are mounted on a movable body such as an automobile, a railroad vehicle, a ship, or an aircraft. The present embodiment is described by taking, as an example, a case where the determination apparatus 100, the camera 200, and the piece of equipment 300 are mounted on an automobile.

An example of the camera 200 is a distance-measuring camera, a stereo camera, a TOF (time-of-flight) camera, or the like. The camera 200 obtains a distance image by taking an image of a predetermined area in the vehicle interior, and outputs the distance image to the determination apparatus 100. The term "predetermined area" here means an area including a first region, a second region, and a third region that are set in the space in the vehicle interior.

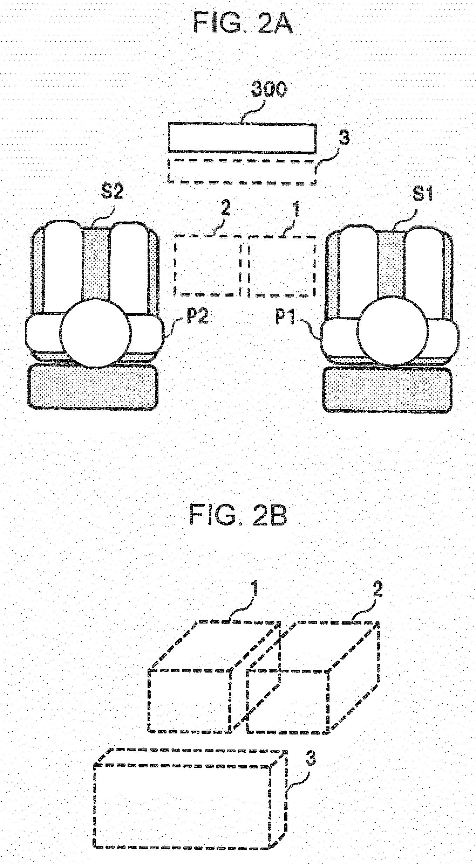

Examples of the first region, the second region, and the third region are described here with reference to Figs. 2A and 2B. Fig. 2A is a top view showing the examples of the first region, the second region, and the third region with the vehicle interior viewed from directly above. Fig. 2B is a perspective view of the examples of the first region, the second region, and the third region as viewed from the side of piece of equipment 300 in the vehicle interior.

As shown in Fig. 2A, an occupant P1 is seated in a first seat S1 (which is an example of a first position), and an occupant P2 is seated in a second seat S2 (which is an example of a second position). The second seat S2 is in a fixed relative positional relationship with the first seat S2. The present embodiment assumes, as an example, that the first seat S1 is a driver's seat, that the occupant P1 is a driver, that the second seat S2 is a passenger seat, and that the occupant P2 is a fellow passenger.

Further, as shown in Fig. 2A, the piece of equipment 300 (which will be described in detail later) is installed in front of the first seat S1 and the second seat S2. The piece of equipment 300 has an operation unit (not illustrated) provided on a surface of the piece of equipment 300 that faces the first seat S1 and the second seat S2.

As shown in Fig. 2A, the first region 1 and the second region 2 are set between the first seat S1 and the second seat S2. The first region 1 is located closer to the first seat S1 than the second region 2 is. The second region 2 is located closer to the second seat S2 than the first region 1 is. When viewed from directly above, the first region 1 and the second region 2 are parallel to each other. In the case of such a parallel arrangement, the load of arithmetic processing in a detection unit 120 is lightest.

As shown in Fig. 2A, the third region 3 is set with reference to the operation unit of the piece of equipment 300. For example, when viewed from directly above, the third region 3 is set between the surface of the piece of equipment 300 on which the operation unit is provided and the first and second regions 1 and 2.

Each of these first, second and third regions 1, 2, and 3 has a cuboidal shape as shown in Fig. 2B.

In the foregoing, the examples of the first region 1, the second region 2, and the third region 3 have been described. In the following, continued reference is made to Fig. 1.

The piece of equipment 300 is a piece of equipment that is used in the automobile. An example of the piece of equipment 300 is a car navigation apparatus, an audio apparatus, an air conditioner apparatus, a tablet, a smartphone, a rear-view camera, a side-view camera, a front-view camera, or an on-board ETC unit. Alternatively, an example of the piece of equipment 300 may be a steering wheel, a shift lever (gear lever), a turn signal lever (indicator switch), a wiper lever (wipe switch), a door lock switch, an up-and-down switch for a power window, an engine starting switch, an accelerator pedal, a brake pedal, a clutch pedal, or the like.

The piece of equipment 300 is connected to the determination apparatus 100 via a cable network (e.g. CAN: Controller Area Network), a wireless network (e.g. wireless LAN: local area network), or a combination of a cable network and a wireless network. Moreover, the piece of equipment 300 is controlled in accordance with a control signal (which is a first control signal or a second control signal that are described later) that is received from the determination apparatus 100.

The determination apparatus 100 includes an input unit (receiver) 110, the detection unit 120, a determination unit 130, and a control unit 140.

The input unit 110 receives the distance image from the camera 200 and outputs the distance image to the detection unit 120.

On the basis of the distance image received from the input unit 110, the detection unit 120 detects a first physical object of a predetermined size or larger in at least either the first region 1 or the second region 2 and detects a second physical object of a predetermined size or larger in the third region 3. An example of the first physical object is an arm of an occupant, and an example of the second physical object is a hand of an occupant. The term "arm" here means a predetermined body part between a shoulder and a wrist. The term "hand" here means a predetermined body part between a wrist and a fingertip.

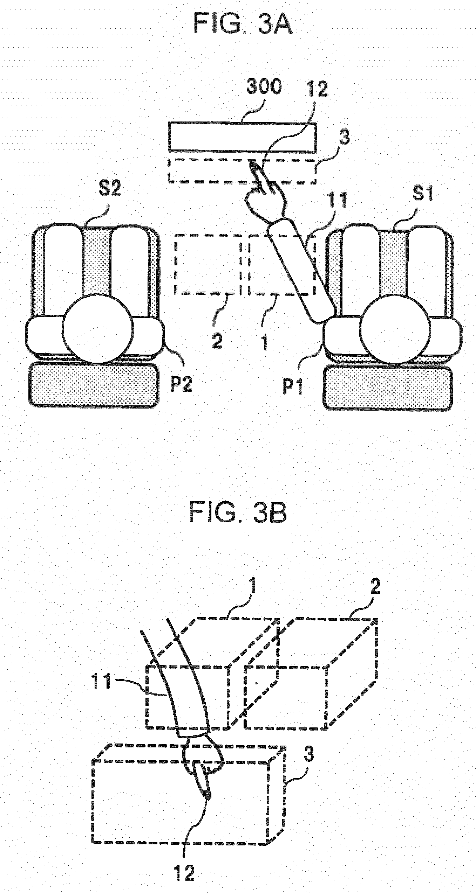

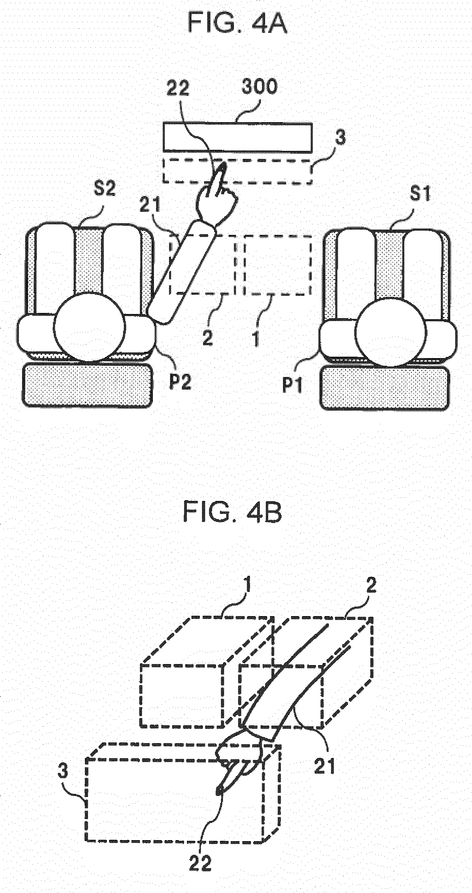

Examples of detection processes that are performed by the detection unit 120 are described here with reference to Figs. 3 and 4.

First, a detection process that is performed when the occupant P1 operates the piece of equipment 300 is described with reference to Figs. 3A and 3B. Fig. 3A is a top view showing an example of a state where the occupant P1 is going to operate the piece of equipment 300. Fig. 3B is a perspective view showing the example of the state shown in Fig. 3A.

As shown in Fig. 3A, the occupant P1 extends his/her arm 11 (which is an example of the first physical object) toward the piece of equipment 300 to operate the piece of equipment 300 with his/her index finger 12 (which is an example of the second physical object). Let it be assumed here that, as shown in Figs. 3A and 3B, the arm 11 is in the first region 1 and the index finger 12 is in the third region 3. In this case, the detection unit 120 detects the arm 11 in the first region 1 if the size of the object in the first region 1 (e.g. the number of pixels in a part corresponding to a surface of the object) is equal to or greater than a predetermined value. Further, the detection unit 120 detects the index finger 12 in the third region 3 if the size of the object in the third region 3 (e.g. the number of pixels in a part corresponding to a surface of the object) is equal to or greater than a predetermined value.

Having thus detected the arm 11 in the first region 1 and detected the index finger 12 in the third region 3, the detection unit 120 outputs, to the determination unit 130, detection result information indicating that the arm 11 is included in the first region 1.

Next, a detection process that is performed when the occupant P2 operates the piece of equipment 300 is described with reference to Figs. 4A and 4B. Fig. 4A is a top view showing an example of a state where the occupant P2 is going to operate the piece of equipment 300. Fig. 4B is a perspective view showing the example of the state shown in Fig. 4A.

As shown in Fig. 4A, the occupant P2 extends his/her arm 21 (which is an example of the first physical object) toward the piece of equipment 300 to operate the piece of equipment 300 with his/her index finger 22 (which is an example of the second physical object). Let it be assumed here that, as shown in Figs. 4A and 4B, the arm 21 is in the second region 2 and the index finger 22 is in the third region 3 as shown in Figs. 4A and 4B. The detection unit 120 detects the arm 21 in the second region 2 if the size of the arm 21 in the second region 2 (e.g. the number of pixels in a part corresponding to a surface of the arm) is equal to or greater than a predetermined value. Further, the detection unit 120 detects the index finger 22 in the third region 3 if the size of the index finger 22 in the third region 3 (e.g. the number of pixels in a part corresponding to a surface of the finger) is equal to or greater than a predetermined value.

Having thus detected the arm 21 in the second region 2 and detected the index finger 22 in the third region 3, the detection unit 120 outputs, to the determination unit 130, detection result information indicating that the arm 21 is included in the second region 2.

It should be noted that the detection of the first physical object and the detection of the second physical object may be performed at the same timing or at different timings.

Further, although the foregoing description has taken, as examples, a case where the arm 11 is present only in the first region 1 and a case where the arm 21 is present only in the second region 2, there may alternatively be a case where an arm 11 (or arm 21) of a predetermined size or larger extended toward the piece of equipment 300 is present across the first and second regions 1 and 2. In that case, the detection unit 120 compares the size of a part of the arm 11 (or arm 21) in the first region 1 with the size of a part of the arm 11 (or arm 21) in the second region 2 and outputs, to the determination unit 130, detection result information indicating that the arm 11 (or arm 21) is included in the region in which the larger part of the arm 11 (or arm 21) is present. For example, in a case where the arm 11 is present across the first and second regions 1 and 2 and the size of a part of the arm 11 in the first region 1 is larger than the size of a part of the arm 11 in the second region 2, the detection unit 120 outputs, to the determination unit 130, detection result information indicating that the arm 11 is included in the first region 1.

In the foregoing, the examples of the detection processes that are performed by the detection unit 120 have been described. In the following, continued reference is made to Fig. 1.

The determination unit 130 determines, on the basis of the detection result information received from the detection unit 120, whether a person who is going to operate the piece of equipment 300 (hereinafter also referred to as "operator") is the occupant P1 or the occupant P2. As noted above, in the present embodiment, for example, the occupant P1 is a driver, and the occupant P2 is a fellow passenger.

In a case where the detection result information indicates that the arm 11 is included in the first region 1, the determination unit 130 determines that the occupant P1 is the operator of the piece of equipment 300.

On the other hand, in a case where the detection result information indicates that the arm 21 is included in the second region 2, the determination unit 130 determines that the occupant P2 is the operator of the piece of equipment 300.

Then, the determination unit 130 outputs, to the control unit 140, determination result information indicating the determination result (i.e. whether the operator of the piece of equipment 300 is the occupant P1 or the occupant P2).

The control unit 140 generates, on the basis of the determination result information received from the determination unit 130, a control signal in accordance with which the piece of equipment 300 is controlled, and outputs the control signal to the piece of equipment 300.

or example, in a case where the determination result information indicates that the occupant P1 is the operator of the piece of equipment 300, the control unit 140 generates a first control signal for restricting a predetermined operation on the piece of equipment 300, and outputs the first control signal to the piece of equipment 300.

For example, in a case where the piece of equipment 300 is a navigation apparatus, the first control signal is a signal to control the piece of equipment 300 so that the piece of equipment 300 displays no menus or a signal to control the piece of equipment 300 so that the piece of equipment 300 displays only a driver's menu.

By being controlled in accordance with the first control signal received from the control unit 140, the piece of equipment 300 comes, for example, into a state where the piece of equipment 300 accepts no operations or does not accept some operations. This places restrictions on operations that the occupant P1, who is a driver, can perform on the piece of equipment 300. This in turn makes it possible to prevent an accident or the like that may occur if the driver operated the piece of equipment 300 while driving.

On the other hand, in a case where the determination result information indicates that the occupant P2 is the operator of the piece of equipment 300, the control unit 140 generates a second control signal for not restricting a predetermined operation on the piece of equipment 300, and outputs the second control signal to the piece of equipment 300.

For example, in a case where the piece of equipment 300 is a navigation apparatus, the second control signal is a signal to control the piece of equipment 300 so that the piece of equipment 300 displays all menus.

By being controlled in accordance with the second control signal received from the control unit 140, the piece of equipment 300 comes, for example, into a state where the piece of equipment 300 accepts all operations. This places no restrictions on operations that the occupant P2, who is a fellow passenger, can perform on the piece of equipment 300. This in turn allows the fellow passenger, who is not involved in driving, to freely operate the piece of equipment 300.

It should be noted that although the foregoing description assumes that the control unit 140 outputs the first or second control signal thus generated to the piece of equipment 300, the control unit 140 may alternatively output the second control signal thus generated to the piece of equipment 300 only in a case where the determination result information indicates that the occupant P2, who is a fellow passenger, is the operator of the piece of equipment 300. In this case, only in a case where the piece of equipment 300 received the second control signal does the piece of equipment 300 come into a state where the piece of equipment 300 accepts all operations, and in a case where the piece of equipment 300 did not receive the second control signal, the piece of equipment 300 comes into a state where a predetermined operation is restricted. This eliminates the need for the first control signal as a control signal to be outputted to the piece of equipment 300.

Further, although, in the foregoing description, which assumes that the first seat S1 is a driver's seat (the occupant P1 is a driver) and the second seat S2 is a passenger seat (the occupant P2 is a fellow passenger), the first control signal is outputted in a case where the first physical object is included in the first region and the second control signal is outputted in a case where the first physical object is included in the second region 2, this does not imply any limitation. For example, assuming that the first seat S1 is a passenger seat (the occupant P1 is a fellow passenger) and the second seat S2 is a driver's seat (the occupant P2 is a driver), the second control signal may be outputted in a case where the first physical object is included in the first region and the first control signal may be outputted in a case where the first physical object is included in the second region 2.

Further, although, in the example shown in Fig. 1, the determination apparatus 100 is configured to include the control unit 140, the determination apparatus 100 may alternatively be configured not to include the control unit 140. That is, the determination apparatus 100 needs only be configured to include at least the input unit 110, the detection unit 120, and the determination unit 130.

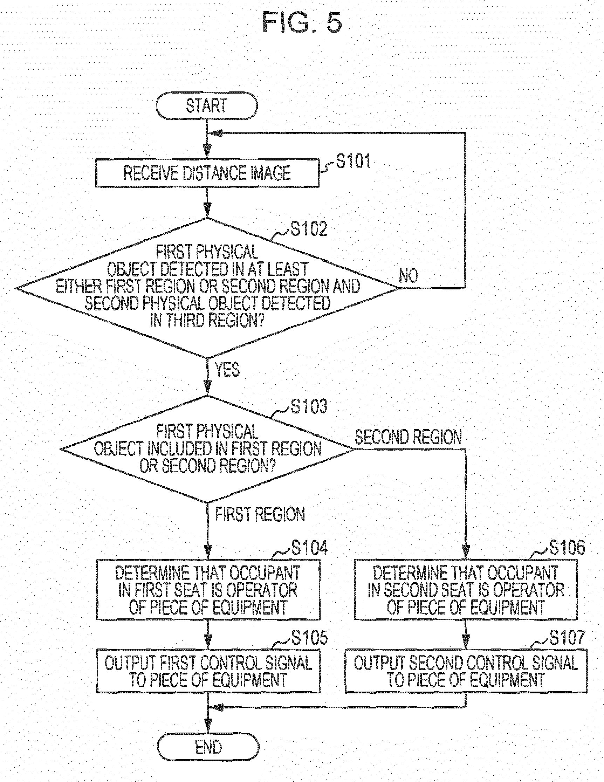

Next, an example of an operation of the determination apparatus 100 according to the embodiment of the present disclosure is described with reference to Fig. 5. Fig. 5 is a flow chart showing an example of the flow of an operation of the determination apparatus 100 according to the embodiment of the present disclosure.

First, the input unit 110 receives a distance image from the camera 200 (step S101). As noted above, the distance image is an image obtained by taking an image of an area in the vehicle interior that includes the first region 1, the second region 2, and the third region 3. Then, the input unit 110 outputs, to the detection unit 120, the distance image received from the camera 200.

Next, the detection unit 120 determines, on the basis of the distance image received from the input unit 110, whether it has detected a first physical object of a predetermined size or larger in at least either the first region 1 or the second region 2 and detected a second physical object of a predetermined size or larger in the third region 3 (step S102). As noted above, an example of the first physical object is the arm 11 of the occupant P1 or the arm 21 of the occupant P2. Further, as noted above, an example of the second physical object is the index finger 12 of the occupant P1 or the index finger 22 of the occupant P2.

If either the first physical object or the second physical object was not detected (step S102: NO), the flow returns to step S101.

If having detected both the first physical object and the second physical object (step S102: YES), the detection unit 120 outputs detection result information to the determination unit 130. As noted above, for example, if having detected the arm 11 in the first region 1 and detected the index finger 12 in the third region 3, the detection unit 120 outputs, to the determination unit 130, detection result information indicating that the arm 11 is included in the first region 1. Alternatively, as noted above, for example, if having detected the arm 21 in the second region 2 and detected the index finger 22 in the third region 3, the detection unit 120 outputs, to the determination unit 130, detection result information indicating that the arm 21 is included in the second region 2.

Next, the determination unit 130 determines, on the basis of the detection result information received from the detection unit 120, whether the first physical object is included in the first region 1 or the second region 2 (step S103).

In a case where the detection result information indicates that the first physical object is included in the first region (step S103: FIRST REGION), the determination unit 130 determines that the occupant P1 in the first seat S1 is the operator of the piece of equipment 300 (step S104). As noted above, for example, the first seat S1 is a driver's seat, and the occupant P1 is a driver. Then, the determination unit 130 outputs, to the control unit 140, determination result information indicating that the occupant P1 in the first seat S1 is the operator of the piece of equipment 300.

Then, since the determination result information indicates that the occupant P1 in the first seat S1 is the operator of the piece of equipment 300, the control unit 140 generates a first control signal for restricting a predetermined operation on the piece of equipment 300, and outputs the first control signal to the piece of equipment 300 (step S105). The piece of equipment 300 is controlled in accordance with the first control signal to come, for example, into a state where the piece of equipment 300 accepts no operations or does not accept some operations. This places restrictions on operations that the occupant P1, who is a driver, can perform on the piece of equipment 300.

On the other hand, in a case where the detection result information indicates that the first physical object is included in the second region 2 (step S103: SECOND REGION), the determination unit 130 determines that the occupant P2 in the second seat S2 is the operator of the piece of equipment 300 (step S106). As noted above, for example, the second seat S2 is a passenger seat, and the occupant P2 is a fellow passenger. Then, the determination unit 130 outputs, to the control unit 140, determination result information indicating that the occupant P2 in the second seat S2 is the operator of the piece of equipment 300.

Then, since the determination result information indicates that the occupant P2 in the second seat S2 is the operator of the piece of equipment 300, the control unit 140 generates a second control signal for not restricting a predetermined operation on the piece of equipment 300, and outputs the second control signal to the piece of equipment 300 (step S107). The piece of equipment 300 is controlled in accordance with the second control signal to come, for example, into a state where the piece of equipment 300 accepts all operations. This places no restrictions on operations that the occupant P2, who is a fellow passenger, can perform on the piece of equipment 300.

As described above, the determination apparatus 100 according to the present embodiment is configured to, if having detected a first physical object in at least either the first region 1 set closer to the first seat S1 than to the second seat S2 or the second region 2 set closer to the second seat S2 than to the first seat S1 and detected a second physical object in the third region 3 set with reference to the operation unit of the piece of equipment 300, determine the operator according to whether the first physical object is included in the first region 1 or the second region 2. As such, the determination apparatus 100 can determine the operator of the piece of equipment with a higher degree of accuracy for more appropriate control.

In the foregoing, the embodiment of the present disclosure has been described. However, the present disclosure is not limited to the description of the embodiment. In the following, modifications are described.

### <Modification 1>

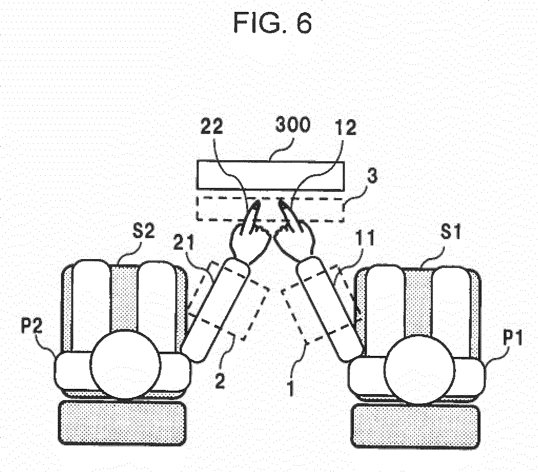

Although the embodiment has been described by giving an example in which the first region 1 and the second region 2 are parallel to each other when viewed from directly above (see Fig. 2A), this does not imply any limitation. For example, as shown in Fig. 6, the first region 1 and the second region 2 do not need to be parallel to each other when viewed from directly above.

### <Modification 2>

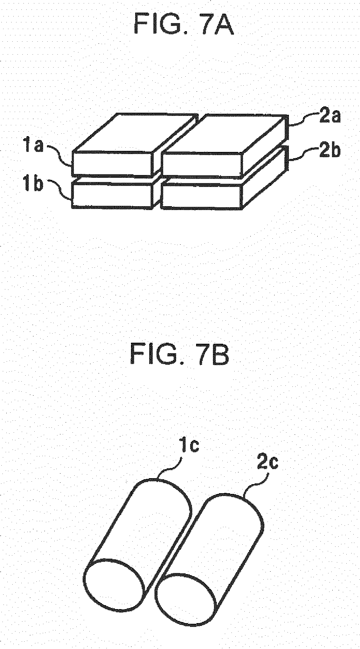

Further, although the embodiment has been described by giving an example in which one first region 1 and one second region 2 are set (see Fig. 2B), this does not imply any limitation. For example, as shown in Fig. 7A, two first regions 1 a and 1 b may be set one above the other, and two second regions 2a and 2b may be set one above the other. Increasing the numbers of first regions and second regions in this way allows simultaneous determination of the presence or absence of a plurality of body parts associated with an arm of a person, such as a wrist, an elbow, and a shoulder. This makes it possible to reduce the number of cases of erroneous determination of states where a part of a human body other than an arm is in the first region 1 or the second region 2, thus making it possible to more accurately determine whether a first physical object associated with a second physical object detected in the third region 3 belongs to the driver or the fellow passenger.

### <Modification 3>

Further, although the embodiment has been described by giving an example in which each of the first and second regions 1 and 2 has a cuboidal shape (see Fig. 2B), this does not imply any limitation. For example, as shown in Fig. 7B, a first region 1c and a second region 2c each having a columnar shape may be set. In that case, the detection unit 120 may refer to a mathematical expression or a lookup table in determining whether a first physical object is in at least either the first region 1 c or the second region 2c. The lookup table is a list of coordinates (x, y, z) at which the first physical object is determined to be in the first region 1c or the second region 2c. It should be noted that a cuboidal shape is lighter in load of arithmetic processing than a columnar shape. Alternatively, instead of having the aforementioned columnar shape, each of the first and second regions may have a cylindrical shape, a shape of one of two lengthwise halves of a cylindrical shape, or a shape obtained by patterning one of two lengthwise halves of a cylindrical shape after the shape of a first physical object (e.g. the shape of a elbow being bent).

<Modification 4>

Further, although the embodiment and Modification 3 have been described by giving an example in which each of the first and second regions has a predetermined three-dimensional shape, planes may alternatively be used. For example, in a case where one plane is used, the presence of a first physical object may be determined by determining whether the first physical object is located above or below the plane. Alternatively, for example, in a case where two planes are used, the presence of a first physical object may be determined by determining whether the first physical object is located between the two planes.

### <Modification 5>

Further, although the embodiment has been described by giving an example in which the first region 1 and the second region 2 are located between the first seat S1 and the second seat S2 when viewed from directly above (see Fig. 2A), this does not imply any limitation. For example, a part of the first region 1 may overlap the first seat S1 when viewed from directly above. Further, a part of the second region 2 may overlap the second seat S2 when viewed from directly above.

### <Modification 6>

Further, although the embodiment has been described by giving an example in which the first region 1 and the second region 2 are set at a predetermined distance from each other when viewed from directly above (see Fig. 2A), this does not imply any limitation. For example, a part of the first region 1 and a part of the second region 2 may overlap each other when viewed from directly above.

### <Modification 7>

Further, although the embodiment has been described by giving an example in which, when viewed from directly above, the third region 3 is set at a predetermined distance from the surface of the piece of equipment 300 on which the operation unit is provided (see Fig. 2A), this does not imply any limitation. For example, one surface of the third region 3 may overlap the surface of the piece of equipment 300 on which the operation unit is provided, or may encompass a part or the whole of the piece of equipment 300.

### <Modifcation 8>

Further, although the embodiment has been described by giving an example in which one third region 3 is set for one piece of equipment 300, this does not imply any limitation. For example, in a case where there are plural pieces of equipment 300, third regions 3 may be set for each separate piece of equipment 300. Alternatively, in the case of plural pieces of equipment 300 installed in positions close to each other, one third region 3 may be set in correspondence with those plural pieces of equipment 300. It should be noted that in a case where a plurality of third regions 3 are set, a plurality of first regions 1 and a plurality of second regions 2 may be set so as to correspond to the third regions 3, respectively.

### <Modification 9>

Further, although the embodiment has been described by giving an example in which the first physical object is an arm and the second physical object is a finger (hand), this does not imply any limitation. For example, the first physical object may be a leg, and the second physical object may be a foot. The term "leg" here means a predetermined body part between the groin (pelvis) and an ankle. Further, the term "foot" here means a predetermined body part between an ankle and a toe. Alternatively, for example, the first physical object may be a part (intermediate joint and proximal joint) between the base of a predetermined finger and the first joint or the back of a hand, or may be a part (distal joint) from the first joint to the tip of the finger. Alternatively, for example, the first physical object may be an elbow, and the second physical object may be a finger. It should be noted that the first region 1, the second region 2, and the third region 3 may be set as appropriate according to the settings of body parts (first and second physical objects).

### <Modification 10>

Further, the embodiment may be configured such that in a case where the first seat S1 and the second seat S2 are each movable in a predetermined direction (e.g. an up-and-down direction, a front-and-back direction, or a right-and-left direction), the control unit 140 may change a range (e.g. shape or size) of at least either the first region 1 or the second region 2 according to the positions in which the first physical object and the second physical object are present in a case where an occupant seated in a seat that has been moved operates the piece of equipment 300. The range to be changed is determined in advance on the basis of values obtained by experiment or the like for each position of the seat that has been moved. It should be noted that the control unit 140 may recognize, from the distance image taken by the camera 200, the position of the seat that has been moved, or may receive, via an in-car network for example from a sensor that is capable of detecting the position of a seat, information indicating the position of the seat that has been moved.

Further, in a case where the first seat S1 and the second seat S2 are reclinable, the control unit 140 may change a range (e.g. shape or size) of at least either the first region 1 or the second region 2 according to the positions in which the first physical object and the second physical object are present in a case where an occupant seated in a seat that has been reclined operates the piece of equipment 300. The range to be changed is determined in advance on the basis of values obtained by experiment or the like for each position of the seat that has been reclined, Alternatively, the range to be changed may be determined on the basis of the physical constitution of the occupant.

### <Modification 11 >

Further, although the embodiment has been described by giving an example in which the first control signal is outputted in a case where the first physical object is included in the first region 1 and the second control signal is outputted in a case where the first physical object is included in the second region 2, this does not imply any limitation. For example, the second control signal may be outputted in a case where the first physical object is included in the first region 1, and the first control signal may be outputted in a case where the first physical object is included in the second region 2.

For example, let it be assumed, in Fig. 2A, that the piece of equipment 300 is a piece of equipment 300 whose operation affects the driving safety of the automobile (such as a steering wheel, a gear lever, or a door lock switch), that the occupant P1 is a driver, and that the occupant P2 is a fellow passenger. Given this assumption, in a case where the first physical object is included in the first region 1, the control unit 140 may output a second output signal that does not restrict operations on the piece of equipment 300, and in a case where the first physical object is included in the second region 2, the control unit 140 may output a first control signal that restricts all operations on the piece of equipment 300. This makes it possible to prevent the fellow passenger to carelessly operate the piece of equipment 300, thus making it possible to ensure safety during driving.

### <Modification 12>

Further, although the embodiment has been described by giving an example in which the first seat S1 is a driver's seat (the occupant P1 is a driver) and the second seat S2 is a passenger seat (the occupant P2 is a fellow passenger), this does not imply any limitation. For example, the first seat S1 may be a passenger seat (the occupant P1 may be a fellow passenger), and the second seat S2 may be a driver's seat (the occupant P2 is a driver). In that case, as noted above, the second control signal may be outputted in a case where the first physical object is included in the first region 1, and the first control signal may be outputted in a case where the first physical object is included in the second region 2.

### <Modification 13>

Further, in the embodiment, after having determined the operator, the determination unit 130 may output, to a device other than the piece of equipment 300 (such as a storage device or a communication device), determination result information indicating a result of the determination and detection result information used for the determination. The pieces of information outputted to the device other than the piece of equipment 300 may be utilized, for example, as big data. It should be noted that it is desirable that the determination result information or the detection result information contain information indicative of the point in time where the determination or the detection was performed.

### <Modification 14>

Further, although the embodiment has been described by giving an example in which the determination apparatus 100, the camera 200, and the piece of equipment 300 are mounted on an automobile, this does not imply any limitation. The determination apparatus 100, the camera 200, and the piece of equipment 300 may be mounted on a movable body other than an automobile (such as a railroad vehicle, a ship, or an aircraft), or may be mounted in a place other than a movable body.

In the foregoing, the embodiment and modifications of the present disclosure have been described.

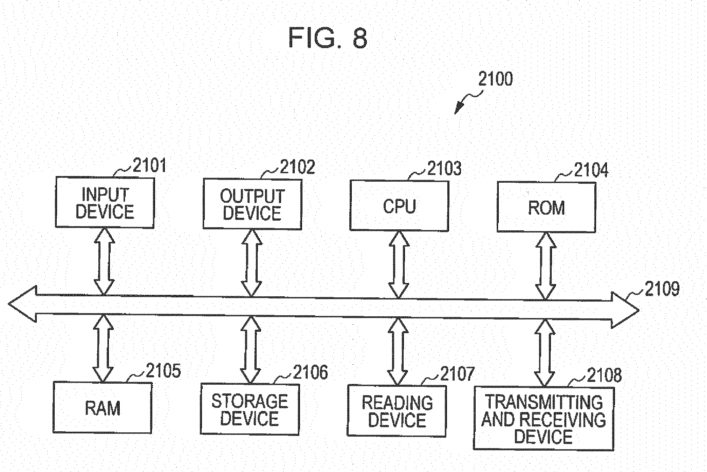

Fig. 8 is a diagram showing a hardware configuration of a computer that programmatically achieves a function of each component in the above-described embodiment and modifications.

As shown in Fig. 8, a computer 2100 includes an input device 2101 such as an input button or a touch panel, an output device 2102 such as a display or a speaker, a CPU (central processing unit) 2103, a ROM (read-only memory) 2104, and a RAM (random access memory) 2105. Further, the computer 2100 includes a storage device 2106 such as a hard disk device or an SSD (solid state drive), a reading device 2107 that reads information from a recording medium such as a DVD-ROM (digital versatile disc-read only memory) or a USB (universal serial bus) memory, and a transmitting and receiving device 2108 that performs communication via a network. These components are connected to one another through a bus 2109.

Moreover, the reading device 2107 reads a program for achieving a function of each of the components from a recording medium storing the program, and stores the program in the storage device 2106. Alternatively, the transmitting and receiving device 2108 communicates with a server apparatus connected to the network, downloads a program for achieving a function of each of the components from the server apparatus, and stores the program in the storage device 2106.

Then, the function of each of the components is achieved by the CPU 2103 copying the program stored in the storage device 2106 to the RAM 2105, sequentially reading commands contained in the program from the RAM 2105, and sequentially executing the commands. Further, during execution of the program, information obtained through the various processes described in the embodiment may be stored in the RAM 2105 or the storage device 2106 to be utilized as needed.

A determination apparatus, a determination method, and a recording medium according to the present disclosure are useful in determining a person who operates a predetermined piece of equipment.

## Claims

1. A determination apparatus comprising:
a receiver which, in operation, receives a distance image including a first region located between a first position and a second position, a second region located between the first position and the second position and located closer to the second position than the first region, a third region set within a predetermined area from an operation unit of a piece of equipment installed in front of the first position and the second position, the first position and the second position being in fixed positions relative to each other;
a detector which, in operation" on a basis of the distance image, detects a first physical object of a predetermined size or larger in at least either the first region or the second region and detects a second physical object of a predetermined size or larger in the third region; and
a determiner which, in operation, when, in a case where the first physical object and the second physical object have been detected, the first physical object is included in the first region, determines that an operator of the piece of equipment is present in the first position or, when, in a case where the first physical object and the second physical object have been detected, the first physical object is included in the second region, determines that an operator of the piece of equipment is present in the second position.

2. The determination apparatus according to Claim 1, further comprising a controller which, in operation, outputs a control signal on a basis of a determination result yielded by the determiner,
wherein on a basis of a position of the operator of the piece of equipment, the controller outputs the control signal to the piece of equipment as a control signal for restricting a predetermined operation of the piece of equipment or as a control signal for not restricting a predetermined operation of the piece of equipment.

3. The determination apparatus according to Claim 1, wherein the first physical object is an arm, and
the second physical object is a hand.

4. The determination apparatus according to Claim 1, wherein the first region has a cuboidal shape or a columnar shape, and
the second region has a cuboidal shape or a columnar shape.

5. The determination apparatus according to Claim 1, wherein the first position and the second position are each a seat that is movable in a predetermined direction, and
the controller changes a range of at least either the first region or the second region according to a position of the seat after movement.

6. A determination method comprising:
receiving a distance image including a first region located between a first position and a second position, a second region located between the first position and the second position and located closer to the second position than the first region, a third region set within a predetermined area from an operation unit of a piece of equipment installed in front of the first position and the second position, the first position and the second position being in fixed positions relative to each other;
on a basis of the distance image, detecting a first physical object of a predetermined size or larger in at least either the first region or the second region and detecting a second physical object of a predetermined size or larger in the third region; and
when, in a case where the first physical object and the second physical object have been detected, the first physical object is included in the first region, determining that an operator of the piece of equipment is present in the first position or, when, in a case where the first physical object and the second physical object have been detected, the first physical object is included in the second region, determining that an operator of the piece of equipment is present in the second position.

7. A non-transitory computer-readable recording medium storing a determination program that is executed by a determination apparatus that determines a person who operates a predetermined piece of equipment, the non-transitory computer-readable recording medium causing a computer of the determination apparatus to execute:
a process of receiving a distance image including a first region located between a first position and a second position, a second region located between the first position and the second position and located closer to the second position than the first region, a third region set within a predetermined area from an operation unit of a piece of equipment installed in front of the first position and the second position, the first position and the second position being in fixed positions relative to each other;
a process of, on a basis of the distance image, detecting a first physical object of a predetermined size or larger in at least either the first region or the second region and detecting a second physical object of a predetermined size or larger in the third region; and
a process of, when, in a case where the first physical object and the second physical object have been detected, the first physical object is included in the first region, determining that an operator of the piece of equipment is present in the first position or, when, in a case where the first physical object and the second physical object have been detected, the first physical object is included in the second region, determining that an operator of the piece of equipment is present in the second position.
